# EUROPÄISCHE PATENTSCHRIFT

(11) **EP 2 364 124 B1**
(45) Veröffentlichungstag und Bekanntmachung des Hinweises auf die Patenterteilung: **17.06.2015**
(21) Anmeldenummer: 09799008.9
(22) Anmeldetag: 02.11.2009
(51) Int. Cl.: A61C 8/00

(54) **DENTALIMPLANTAT ZUR INSERTION IN EINEN KIEFERKNOCHEN**
DENTAL IMPLANT FOR INSERTION INTO A JAWBONE
IMPLANT DENTAIRE DESTINÉ À ÊTRE INSÉRÉ DANS UNE MÂCHOIRE

(30) Priorität: 31.10.2008 DE 102008054186
(43) Veröffentlichungstag der Anmeldung: 14.09.2011
(73) Patentinhaber: Böhm-Van Diggelen, Bernd, 90453 Nürnberg (DE)
(72) Erfinder: Böhm-Van Diggelen, Bernd, 90453 Nürnberg (DE)
(86) Internationale Anmeldenummer: PCT/DE2009/001527
(87) Internationale Veröffentlichungsnummer: WO 2010/048944

(56) Entgegenhaltungen:
- WO-A1-2008/125049
- WO-A1-2008/125097
- CN-A- 101 530 350

## Beschreibung

Die Erfindung betrifft ein Dentalimplantat zur Insertion in einen Kieferknochen und zum Befestigen von Zahnersatz.

Aus der DE 10 2006 053 260 A1 ist ein Dentalimplantat bekannt, das auf seiner konischen Außenfläche mit einem Gewinde versehen ist, mit dem das Implantat in eine in den Kieferknochen eingebrachte Bohrung eingeschraubt wird, wo es bis zum Ende des Einheilprozesses verbleibt.

Dieses bekannte Schraubenimplantat hat den Nachteil, dass durch das gewaltsame Einschrauben eine Quetschung des Knochens eintritt, wobei durch die auf das Implantat wirkenden Kräfte ein iatrogener Schaden erzeugt wird, der zwangsläufig die Abheilzeit verlängert, weil die zerquetschte Spongiosa und die Kompakta zuerst abgebaut und danach wieder neu aufgebaut werden müssen. Durch die Knochenquetschung erhöht sich auch die Gefahr einer Spaltbildung um das Implantat herum, das auch einer Drehbelastung nicht standhält.

Aus der WO 2008/125049 A1 ist ein Zahnimplantat bekannt, das aus mehreren zylinderähnlichen Teilen mit je einem Gewinde besteht, die einzeln nacheinander in verschiedene, in den im Kieferknochen einzubringende Ausnehmungen eingeschraubt werden, deren Symmetrieachsen in verschiedenen spitzen Winkeln zueinander verlaufen. Dieses Implantat ist zwar sicher gegen Verdrehungen, ist aber sehr aufwändig und belastet den Patienten noch mehr als das vorgenannte einfache Schraubenimplantat.

Aus der WO 2008/125097 A1 ist ein aus einem Stück gefertigtes Dentalimplantat bekannt, dessen enossaler und gingivaler Bereich entsprechend diagnostisch ermittelter Patientendaten geformt ist. Die entsprechenden Ausnehmungen innerhalb des Kieferknochens lassen sich jedoch nicht-mit einfachen Bohrern herstellen, sondern nur mit einem komplizierten und aufwändigen Fräsverfahren.

Aus der CN 101 530 350 A sind mehrere Dentalimplantate bekannt, die aus zylinderähnlichen Teilen bestehen oder aus zwei solchen Teilen zusammengesetzt sind und in den enossalen Bereichen Gewinde aufweisen, die die vorstehend geschilderten Nachteile haben.

Der vorliegenden Erfindung liegt die Aufgabe zugrunde, ein Implantat so zu verbessern, dass es schnell und leicht, insbesondere auch verdrehungssicher einsetzbar ist, dass das Implantat möglichst schnell eine Osseointegration erfährt, also einen im lichtmikroskopischen Bereich sichtbaren direkten strukturellen Verbund zwischen dem organisierten, lebenden Knochengewebe und der Oberfläche des Implantats.

Diese Aufgabe wird mit den im Kennzeichen des Anspruchs 1 angegebenen Merkmalen gelöst.

Vorteilhafte Ausgestaltungen der Erfindung sind in den Unteransprüchen angegeben.

Die mit der Erfindung erzielten Vorteile bestehen insbesondere darin, dass durch das schnelle Einsetzen des Implantats die Operationszeit verkürzt wird und etwaige Hämatome und Schwellungen entsprechend geringer ausfallen. Ferner wird durch die Konizität des Implantats, insbesondere im Bereich der Kompakta, der Spalt zwischen dem Implantat und dem Knochen minimiert, so dass keine Keime eindringen können. Ferner wird durch die rotationsstabile und kippstabile Form des Implantats sowohl dessen Verdrehen als auch dessen Kippen, insbesondere während der anfänglichen Einheilzeit, zuverlässig verhindert, wodurch die Einheilzeit weiter verkürzt wird. Außerdem wird durch die Beschichtung mit Polytetrafluorethylen (PTFE) eine dem Desmodont (Zwischenschicht zwischen Zahn und Kieferknochen) ähnliche elastische Beschichtung erreicht, die eine bei physiologischer Belastung entstehende Bewegung des Implantats erlaubt, ohne dass dieses sich lockern kann.

Ein Ausführungsbeispiel der Erfindung ist in den Zeichnungen dargestellt und wird im Folgenden näher beschrieben. Es zeigen
- Figur 1: die Ansicht eines Implantats, teilweise im Schnitt, sowie eine Ansicht von oben (1a), einen Schnitt B-B (1b) und einen Schnitt C-C (1c),
- Figur 2: ein Dentalimplantat mit einem Zahnersatz in einer Ausnehmung eines Kieferknochens sowie eine Ausschnittvergrößerung (2a) des Übergangs von der flachen Rillenfräsung zu der tieferen Rillenfräsung in der Oberfläche des Implantats.

Ein großes Problem der bekannten rotationssymmetrischen Dentalimplantate stellt der kreisrunde Querschnitt dar, der im Gegensatz zu einer natürlichen Wurzelform eine Rotation nicht verhindern kann.

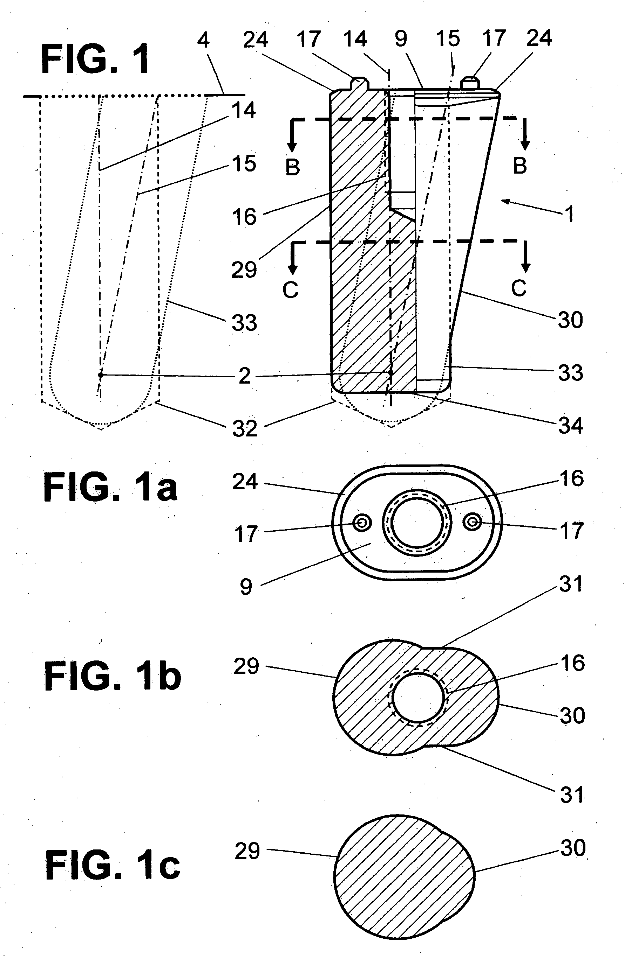

Dieses Problem wird durch das anatomisch angeglichene Implantat 1 gemäß Fig. 1 gelöst, das eine Gestalt aufweist, die zwei sich zum Teil überlappenden zylinderähnlichen Körpern 29, 30 mit deutlich voneinander abweichenden Durchmessern entspricht. Die Symmetrieachse 14 des ernsten Körpers 29 mit dem größeren Durchmesser verläuft im in den Kieferknochen eingesetzten Zustand rechtwinklig zur Kompakta 4, und die Symmetrieachse 15 des zweiten Körpers 30 mit dem kleineren Durchmesser ist gegenüber der Symmetrieachse 14 des ersten Körpers 29 um einen spitzen Winkel gekippt. Der Schnittpunkt 2 der Symmetrieachsen 14, 15 befindet sich auf der Symmetrieachse des ersten Körpers 29, und zwar in dessen unterem Bereich.

Die Fig. 1a zeigt eine Ansicht des Implantats 1 von oben, wo ein Gewinde 16, Rastbolzen 17 und eine umlaufende Abschrägung 24 zum verdrehungssicheren Befestigen eines Zahnersatzes 8 deutlich zu sehen sind.

Die Fig. 1b zeigt den Schnitt B-B, in dem die unterschiedlichen Durchmesser der zwei sich überlappenden zylinderähnlichen Körper 29, 30, die seitlichen Verbindungsflächen 31 zwischen den beiden Körpern 29, 30 sowie das Gewinde 16 zu sehen sind.

Die Fig. 1c zeigt den Schnitt C-C. In diesem Bereich besteht eine deutliche Überlappung der Körper 29, 30, die nach unten hin immer stärker wird, wie auch aus der Fig. 1 deutlich zu erkennen ist.

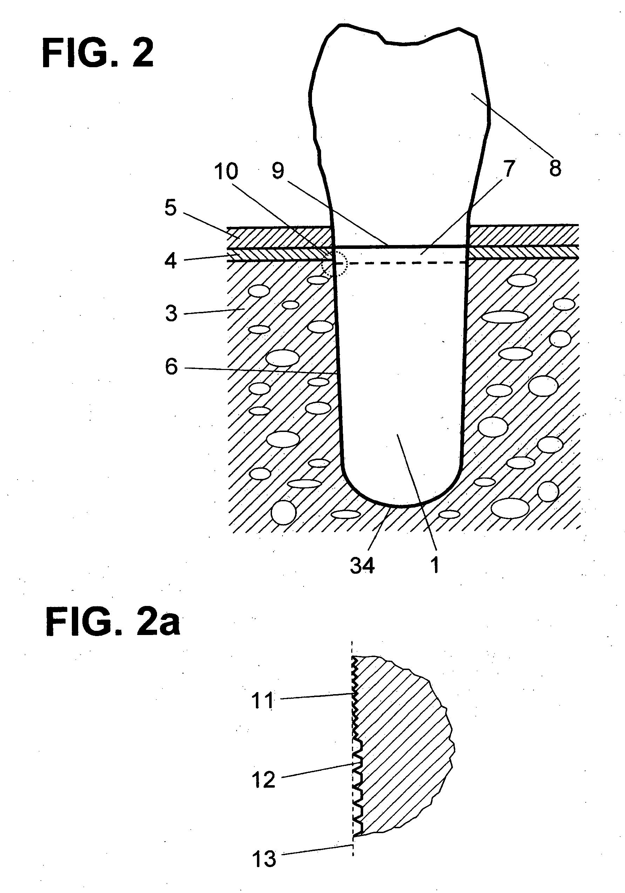

Die Fig. 2 zeigt die leicht konische Form des Implantats 1, das in eine entsprechende, in einen Kieferknochen eingebrachte Ausnehmung eingesetzt ist.

Der enossale (in den Kieferknochen eingreifende) Bereich 6, 7 der Oberfläche des Implantats 1 weist mindestens in dem an der Kompakta 4 (äußere harte Knochenschicht) anliegenden Bereich 7 eine flache Rillenfräsung 11 auf, während in dem an der Spongiosa 3 (Maschenwerk feiner Knochenbälkchen im Inneren des Kieferknochens) anliegenden Bereich 6 eine tiefere Rillenfräsung 12 angebracht ist, die an keiner Stelle das Oberflächenniveau 13 der flachen Rillenfräsung 11 überschreitet, wie Fig. 2a in einer Vergrößerung des Abschnitts 10 in Fig. 2 zeigt.

Das wird durch ein entsprechendes Herstellungsverfahren erreicht, bei dem zunächst die Oberfläche des Implantats 1 in dem enossalen Bereich 6, 7 maschiniert wird, um danach den an der Kompakta 4 anliegenden Bereich 7 mit einer flachen Rillenfräsung und danach den an der Spongiosa 3 anliegenden Bereich 6 mit einer tieferen Rillenfräsung 12 zu versehen. Durch diese Reihenfolge der Bearbeitung wird erreicht, dass die auf der Metalloberfläche enstehenden hohen Berge und Täler 12 mit ihren "Bergspitzen" die der kleinen Berge und Täler 11 an keiner Stelle übersteigen, wie die schematische Darstellung in Fig. 2a mit dem gestrichelt dargestellten Oberflächenniveau 13 zeigt. Dadurch wird vermieden, dass nach der Insertion eines derartigen Implantats 1 ein Spalt zwischen dem mit der flachen Rillenfräsung versehenen Hals und der Kompakta 4 entsteht.

Diese Verfahrenstechnik in Kombination mit einer konischen Implantatform ist eine hervorragende Maßnahme, um die Gefahr der Periimplantitis und die Dauer der Einheilphase zu verringern.

Die für das Implantat 1 erforderliche Ausnehmung im Kieferknochen kann durch eine einfache Bohrung mit Hilfe einer Messlehre hergestellt werden, indem der Bohrer innerhalb der Messlehre gekippt wird. In Fig. 1 (links) ist die senkrechte Ausnehmung 32 gestrichelt dargestellt, die durch den gekippten kleineren Bohrer erzielte Ausnehmung 33 zeigt die punktierte Linie. Durch den kleineren gekippten Bohrer wird erreicht, dass auch bei ungenauer Kippung während des Bohrens das Implantat 1 dennoch nicht kippen kann, da es von der ersten, senkrechten Ausnehmung 32 mit dem größeren Durchmesser nach allen Richtungen hin festgehalten wird.

### BEZUGSZEICHENLISTE

- 1: Implantat
- 2: Schnittpunkt der Symmetrieachsen
- 3: Spongiosa
- 4: Kompakta
- 5: Gingiva
- 6: an der Spongiosa anliegender Bereich
- 7: an der Kompakta anliegender Bereich
- 8: Zahnersatz
- 9: Kopfende
- 10: Ausschnitt für Vergrößerung
- 11: flache Rillenfräsung
- 12: tiefere Rillenfräsung
- 13: Oberflächenniveau der Rillenfräsungen
- 14: erste Symmetrieachse
- 15: zweite Symmetrieachse
- 16: Innengewinde des Implantats
- 17: Rastbolzen
- 24: Abschrägung
- 29: erster zylinderähnlicher Körper
- 30: zweiter zylinderähnlicher Körper
- 31: Verbindungsfläche
- 32: große Ausnehmung
- 33: kleine Ausnehmung
- 34: Fußende

## Patentansprüche

1. Dentalimplantat zur Insertion in einen Kieferknochen und zum Befestigen von Zahnersatz, mit einer einstückigen Gestalt, die zwei sich zum Teil überlappenden zylinderähnlichen Körpern (29, 30) mit deutlich voneinander abweichenden Durchmessern entspricht, wobei die Symmetrieachse (15) des zweiten Körpers (30) mit dem kleineren Durchmesser gegenüber der Symmetrieachse (14) des ersten Körpers (29) mit dem größeren Durchmesser um einen zum Fußende (34) hin gerichteten spitzen Winkel gekippt ist.

2. Dentalimplantat nach Anspruch 1, **dadurch gekennzeichnet, dass** der erste-zylinderähnliche Körper (29) und/oder der zweite zylinderähnliche Körper (30) eine leicht konische Form aufweisen, wobei die Durchmesser in Richtung zum Kopfende (9) hin zunehmen.

3. Dentalimplantat nach einem der Ansprüche 1 oder 2, **dadurch gekennzeichnet, dass** der enossale Oberflächenbereich (6, 7) mindestens in dem an der Kompakta (4) anliegenden Bereich (7) eine Hochglanzpolitur oder eine flache Rillenfräsung (11) und in dem an der Spongiosa (3) anliegenden Bereich (6) eine tiefere Rillenfräsung (12) aufweist, die an keiner Stelle das Oberflächenniveau (13) der Hochglanzpolitur bzw. der flachen Rillenfräsung (11) überschreitet.

4. Dentalimplantat nach einem der Ansprüche 1 bis 3, **dadurch gekennzeichnet, dass** wenigstens der enossale Oberflächenbereich (6, 7) mit einer Schicht aus Polytetrafluorethylen (PTFE) überzogen ist.

## Claims

1. Dental implant for insertion into a jawbone and for fastening a tooth replacement, with a shape of one piece corresponding to two partially overlapping cylinder-like bodies (29, 30) that have significantly different diameters, wherein the axis of symmetry (15) of the second body (30) having the smaller diameter is tilted at an acute angle relative to the axis of symmetry (14) of the first body (29) having the larger diameter, wherein the acute angle lies in the direction of the foot end (34).

2. The dental implant as claimed in claim 1, **characterized in that** the first cylinder-like body (29) and/or the second cylinder-like body (30) have a slightly conical shape, with the diameters increasing in the direction of the head end (9).

3. The dental implant as claimed in one of claims 1 or 2, **characterized in that** the endosseous surface area (6, 7), at least in the area (7) bearing on the compact substance (4), has a high polish or shallow grooving (11), and, in the area (6) bearing on the spongy substance (3), has a deeper grooving (12) that nowhere exceeds the surface level (13) of the high polish or of the shallow grooving (11).

4. The dental implant as claimed in one of claims 1 through 3, **characterized in that** at least the endosseous surface area (6, 7) is coated with a layer of polytetrafluoroethylene (PTFE).

## Revendications

1. Implant dentaire destiné à être inséré dans un os maxillaire et à fixer une prothèse dentaire, ayant une forme d'un seul tenant qui correspond à deux corps sensiblement cylindriques (29, 30) se chevauchant en partie et ayant des diamètres se différenciant nettement l'un de l'autre, l'axe de symétrie (15) du deuxième corps (30) au plus petit diamètre étant incliné par rapport à l'axe de symétrie (14) du premier corps (29) au plus grand diamètre d'un angle aigu dirigé vers l'extrémité de pied (34).

2. Implant dentaire selon la revendication 1, **caractérisé en ce que** le premier corps (29) sensiblement cylindrique et/ou le deuxième corps (30) sensiblement cylindrique présentent une forme légèrement conique, les diamètres augmentant en direction de l'extrémité de tête (9).

3. Implant dentaire selon l'une quelconque des revendications 1 ou 2, **caractérisé en ce que** la région de surface endo-osseuse (6, 7) présente au moins dans la région (7) adjacente à la substance compacte (4) un poli brillant ou un rainurage plat (11) et dans la région (6) adjacente à la substance spongieuse (3) un rainurage plus profond (12) qui ne dépasse à aucun endroit le niveau de surface (13) du poli brillant ou du rainurage plat (11).

4. Implant dentaire selon l'une quelconque des revendications 1 à 3, **caractérisé en ce qu'**au moins la région de surface endo-osseuse (6, 7) est recouverte d'une couche de polytétrafluoroéthylène (PTFE).
